# EUROPÄISCHE PATENTSCHRIFT

(11) **EP 3 715 779 B1**
(45) Veröffentlichungstag und Bekanntmachung des Hinweises auf die Patenterteilung: **19.10.2022**
(21) Anmeldenummer: 19166259.2
(22) Anmeldetag: 29.03.2019
(51) Int. Cl.: G01B 11/25, G01N 21/88

(54) **VERFAHREN UND VORRICHTUNG ZUR BESTIMMUNG VON VERFORMUNGEN AN EINEM OBJEKT**
METHOD AND DEVICE FOR DETERMINING DEFORMATION OF AN OBJECT
PROCÉDÉ ET DISPOSITIF DE DÉTERMINATION DES DÉFORMATIONS D'UN OBJET

(43) Veröffentlichungstag der Anmeldung: 30.09.2020
(73) Patentinhaber: Fraunhofer-Gesellschaft zur Förderung der angewandten Forschung e.V., 80686 München (DE); Orzol, Jens, 45473 Mülheim an der Ruhr (DE); Lenhartz, Michael, 45473 Mülheim an der Ruhr (DE)
(72) Erfinder: Baumann, Daniel, 53757 St. Augustin (DE); Möller, Ronja, 53757 St. Augustin (DE); Vonolfen, Wolfgang, 53757 St. Augustin (DE); Hecker, Dirk, 53757 St. Augustin (DE); Bauckhage, Christian, 53757 St. Augustin (DE); Orzol, Jens, 45473 Mülheim an der Ruhr (DE); Lenhartz, Michael, 45473 Mülheim an der Ruhr (DE)
(74) Vertreter: Pfenning, Meinig & Partner mbB

(56) Entgegenhaltungen:
- WO-A1-2018/098551
- DE-A1- 10 104 355
- DE-A1- 19 846 530
- JP-A- H 109 839
- JP-A- H09 280 845
- US-A1- 2018 017 501

## Beschreibung

Die Erfindung betrifft ein Verfahren zur Bestimmung von Verformungen an einem Objekt, wobei das Objekt beleuchtet wird und während der Beleuchtung bewegt wird. Dabei wird das Objekt mittels zumindest einer Kamera beobachtet und durch die Kamera zumindest zwei Kamerabilder zu unterschiedlichen Zeitpunkten erzeugt. In den Kamerabildern werden für durch Formmerkmale bewirkte Reflexionen am Objekt jeweils Polygonzüge ermittelt. Anhand des Verhaltens der Polygonzüge über die zumindest zwei Kamerabilder hinweg werden die Formmerkmale klassifiziert und es wird eine zweidimensionale Repräsentierung erzeugt, welche eine räumliche Verteilung von Verformungen abbildet. Die Erfindung betrifft außerdem eine entsprechende Vorrichtung.

Der hier vorgestellte Ansatz beschreibt einen Low-Cost-Prozess mit minimalem Aufwand im Einsatz für die automatische Erzeugung einer 2D-Repräsentation, um Objektoberflächen und bekannte Abweichungen auf unbekannten Formen bzw. Abweichungen der erwarteten Form zu beschreiben. Sie basiert auf dem Verhalten von Lichtreflektionen, welches dadurch entsteht, dass sich ein zu messendes Objekt unter einer oder mehreren Kameras bewegt. Neben dem beschriebenen Hardware-Aufbau beinhaltet das eingesetzte Verfahren eine bestimmte Kombination von Funktionen aus dem Bereich Machine Learning (ML) und künstlicher Intelligenz (KI). Ein typisches Anwendungsfeld ist die Erkennung von Bauteilefehlern in einer Serienproduktion oder die Erkennung von Hagelschäden bei Fahrzeugen.

Bisherige Systeme auf dem Markt bzw. Beschreibungen für Ansätze in diesem Themenbereich finden sich vor allem auf dem Gebiet der Schadenserkennung, beispielsweise für Unfall- oder Hagelschäden an Fahrzeugen, oder als Unterstützung von Wartungsarbeiten im Rahmen einer präventiven Vorsorge, beispielsweise in der Luftfahrtindustrie. Sie gehen zumeist von einer möglichst genauen Vermessung einer Objektoberfläche oder von einer 3D-Rekonstruktion aus, um Abweichungen der Objektform angemessen vergleichen zu können. Dies bedeutet, dass die bisherigen Verfahren einen oder mehrere der folgenden Nachteile aufweisen:
- Hoher technischer Aufwand für die Messung: Es werden teure Sensoren wie beispielsweise Laser-Distanzmesser eingesetzt. Mitunter erfordert die Vorrichtung einen abgeschlossenen Raum.
- Lange Mess- oder Berechnungszeiten: Die Auswertung der Messergebnisse oder die Berechnung der 3D-Rekonstruktion erfordern einen hohen Berechnungsaufwand von mehr als 10 Minuten bis über eine halbe Stunde.
- Hohe Vorbereitungszeit zur Messung: Das zu vermessende Objekt wie auch die Messvorrichtung müssen ohne Bewegung eine Zeitlang verweilen.
- Mangelnde Mobilität: Die verwendete Vorrichtung ist nicht für einen schnellen Auf- und Abbau geeignet oder bedarf einer festen Installation.

Die WO 2018/098551 beschreibt ein Verfahren und ein System zur automatischen Begutachtung von Materialqualitäten. Es wird dabei eine zu begutachtende Oberfläche mit einem Streifenmuster beleuchtet und ein von der zu begutachtenden Oberfläche reflektiertes Bild mit einer Kamera aufgenommen.

Die US 2018/0017501 A1 beschreibt ein System und Verfahren zur Inspektion von Oberflächen mittels optischer Kohärenz-Tomographie.

Weitere Verfahren des Standes der Technik sind beschrieben in der JP H09 2080845 A1, der JP H10 9839 A, der DE 10 104 355 A1 und der DE 198 46 530 A1.

Aufgabe der Erfindung ist es, ein Verfahren und eine Vorrichtung zur Bestimmung von Verformungen an einem Objekt anzugeben, mit dem zumindest einige, vorzugsweise alle, der genannten Nachteile überwunden werden können.

Diese Aufgabe wird gelöst durch das Verfahren zur Bestimmung von Verformungen an einem Objekt nach Anspruch 1 sowie die Vorrichtung zur Bestimmung von Verformungen an einem Objekt nach Anspruch 12. Die jeweiligen abhängigen Ansprüche geben vorteilhafte Ausgestaltungen des erfindungsgemäßen Verfahrens und der erfindungsgemäßen Vorrichtung an.

Erfindungsgemäß wird ein Verfahren zur Bestimmung von Verformungen an einem Objekt angegeben. Es soll dabei zumindest eine Verformung an dem Objekt bestimmt werden. Unter der Bestimmung von Verformungen soll hier vorzugsweise das Erkennen von Verformungen, das Klassifizieren von Verformungen und/oder das Vermessen von Verformungen verstanden werden.

Erfindungsgemäß wird in einem Beleuchtungsvorgang das Objekt mittels zumindest einer Beleuchtungseinrichtung mit elektromagnetischer Strahlung zumindest einer solchen Frequenz bestrahlt, dass das Objekt die elektromagnetische Strahlung als reflektierte Strahlung reflektiert. Die elektromagnetische Strahlung kann beispielsweise Licht sein, das im sichtbaren Spektrum, im nicht sichtbaren Spektrum, weiß oder jeder anderen Farbe vorliegen kann. Die Wellenlänge der elektromagnetischen Strahlung wird in Abhängigkeit vom Material des Objektes so bestimmt, dass das Objekt die elektromagnetische Strahlung teilweise oder vollständig reflektiert.

Während des Beleuchtungsvorgangs werden erfindungsgemäß das Objekt und die zumindest eine Beleuchtungseinrichtung gegeneinander bewegt. Es kommt hier zunächst nur auf die Relativbewegung zwischen dem Objekt und der Beleuchtungseinrichtung an, es ist jedoch vorteilhaft, wenn die Beleuchtungseinrichtung fest steht und das Objekt relativ zu ihr bewegt wird. Während der Bewegung sollte von der Beleuchtungseinrichtung ausgehende elektromagnetische Strahlung stets auf das Objekt fallen und von diesem reflektiert werden.

In einem Beobachtungsvorgang wird das Objekt mittels zumindest einer Kamera beobachtet und es werden mittels der zumindest einen Kamera zumindest zwei Kamerabilder zu unterschiedlichen Zeitpunkten erzeugt, welche die jeweils reflektierte Strahlung abbilden. Die Kameras nehmen also die elektromagnetische Strahlung auf, nachdem diese von der Beleuchtungseinrichtung abgestrahlt und dann durch das Objekt reflektiert wurde. Vorzugsweise sind die Kameras so ausgerichtet, dass keine Strahlung direkt von der Beleuchtungseinrichtung in die Kameras eintritt. Der Beobachtungsvorgang wird während des Beleuchtungsvorgangs und während des Bewegens des Objektes ausgeführt. Jene Richtung, in der das Objekt bewegt wird, soll im Folgenden als Bewegungsrichtung bezeichnet werden.

Während des Beobachtungsvorgangs wird das Objekt mittels zumindest einer Kamera beobachtet. Die Kamera ist daher vorzugsweise so angeordnet, dass Licht, das von der Beleuchtungseinrichtung ausgesandt wurde und am Objekt reflektiert wurde, in die Kamera eintritt.

Durch die Beobachtung werden mittels der Kamera zumindest zwei Kamerabilder zu unterschiedlichen Zeitpunkten tᵢ, i ∈ N, i = 1...., n, erzeugt, welche die jeweils reflektierte Strahlung, die in die Kamera gelangt, abbilden. Vorzugsweise ist n ≥ 5, besonders bevorzugt ≥ 100, besonders bevorzugt ≥ 500, besonders bevorzugt ≥ 1.000.

Erfindungsgemäß kann nun in den Kamerabildern zumindest eine durch ein Formmerkmal des Objektes bewirkte Reflexion der Strahlung am Objekt bestimmt bzw. identifiziert werden. Als Formmerkmal kann hier jede Struktur oder jeder Teilbereich des Objektes angesehen werden, die bzw. der durch ihre bzw. seine Form und/oder ihre Textur dazu führt, dass die von der Beleuchtungseinrichtung ausgehende Strahlung in die entsprechende Kamera reflektiert wird. In einer optionalen Ausgestaltung kann hierzu die Anordnung des Objektes, der Kamera und der Beleuchtungseinrichtung zueinander so sein, dass zumindest in einem Teilbereich der Kamerabilder nur von Verformungen bewirkte Reflexionen vorhanden sind. In diesem Falle können alle der Formmerkmale Verformungen sein. Es können dabei also alle Reflexionen innerhalb dieses Teilbereichs im Kamerabild von Verformungen ausgehen. Ist beispielsweise das Objekt ein Kraftfahrzeug, so können solcher Teilbereiche zum Beispiel die Motorhaube, das Dach und/oder die Oberseite des Kofferraums oder jeweils Teilbereiche von diesen sein. Die Teilbereiche können vorteilhaft so gewählt werden, dass nur Reflexionen von Verformungen in die Kamera gelangen.

Es sei jedoch darauf hingewiesen, dass dies nicht notwendig ist. Wie im folgenden noch beschrieben wird, können die Reflexionen im erfindungsgemäßen Verfahren auch klassifiziert werden. Durch eine solche Klassifizierung können jene Reflexionen ermittelt werden, die von zu bestimmenden Verformungen ausgehen können, währen andere Reflexionen als von anderen Formmerkmalen des Objektes reflektiert klassifiziert werden können. Im Falle eines Kraftfahrzeuges können beispielsweise einige der Reflexionen von Formmerkmalen wie Sicken oder Kanten auf der Karosserie ausgehen und andere von Formmerkmalen, die nicht dem Sollzustand des Kraftfahrzeuges entsprechen, wie beispielsweise Hagelbeulen. Es können dann zum Beispiel letztere als Verformungen klassifiziert werden.

Als Formmerkmale können beispielsweise Reflektionen bestimmt werden, also solche Bereiche des von der Kamera aufgenommenen Bildes, in denen von der Beleuchtungseinrichtung ausgehendes und durch das Objekt reflektiertes Licht abgebildet wird. Ist das Objekt nicht vollkommen spiegelnd, so können als Reflektionen solche Bereiche in dem entsprechenden Kamerabild angesehen werden, in denen Intensität des von der Lichtquelle ausgesandten und an dem Objekt reflektierten Lichtes einen vorgegebenen Schwellenwert überschreitet. Vorzugsweise wird jede Reflexion als von genau einem Formmerkmal ausgehend angesehen.

Erfahrungsgemäß wird in den Kamerabildern normalerweise zumindest eine Verformung es Objektes sichtbar. Insbesondere verändert eine solche Verformung auch die Reflektionen im von der Kamera aufgenommenen Bild. Sie entspricht dort nicht mehr der Reflektion einer normalen Objektform. Als Verformungen können also vorzugsweise solche Formmerkmale angesehen werden, die nicht Formmerkmale eines Sollzustandes des Objektes sind, also nicht Formmerkmale der normalen Objektform sind.

Auch bei matter Oberfläche des Objektes ist die Reflektion in Richtung (Einfallswinkel=) Ausfallswinkel maximal und nimmt rapide für andere als den Ausfallswinkel ab. Eine matte Oberfläche erzeugt daher normalerweise eine Reflektion mit weichen Kanten. Die Reflektion der Lichtquelle ist als solches noch deutlich von der Reflexion des Hintergrundes unterscheidbar. Ihre Form ändert sich ebenfalls nicht.

Für matte Oberflächen stellt man vorzugsweise die Schwellwert-Parameter für eine Binarisierung ins Schwarz/Weiß-Bild oder für eine Kantenerkennung anderes ein als bei spiegelnden Oberflächen.

Zusätzlich kann die Strahlungsquelle vorteilhafterweise auch fokussiert werden, z.B. über eine Blende.

Erfindungsgemäß wird nun in einem als Polygonzugschritt bezeichneten Schritt für zumindest eine der zumindest einen Reflxionen in den zumindest zwei Kamerabildern jeweils ein Polygonzug bestimmt. Der Polygonzug kann dabei so bestimmt werden, dass er die entsprechende Reflexion bzw. das entsprechende Formmerkmal geschlossen umläuft. Für die Ermittlung des Polygonzuges gibt es zahlreiche verschiedene Möglichkeiten.

Unter einem Polygonzug soll hier eine lineare Form in dem entsprechenden Kamerabild verstanden werden, in der eine Mehrzahl an Punkten jeweils durch gerade Linien miteinander verbunden sind. Der Polygonzug wird vorzugsweise so bestimmt, dass er eine im entsprechenden Kamerabild zusammenhängend erscheinende Reflexion geschlossen umläuft. Dabei können sich beispielsweise die x-Koordinaten der Punkte aus der horizontalen Ausdehnung der betrachteten Reflektion (bzw. des Bereiches der Reflektion, die einen gewählten Helligkeitswert überschreitet) ergeben und die γ-Koordinaten für jede x-Koordinate so gewählt werden, dass sie auf der am stärksten ausgeprägten Ober- bzw. Unterkante (Betrachtung des Helligkeitsgradienten in der zu x gehörigen Spalte des Bildes) positioniert sind. Für Extrempunkte wie die Punkte an den äußeren Enden vereinfachen sich Ober- und Unterkante zu einer γ-Koordinate.

In einem anderen Beispiel kann der Polygonzug so bestimmt werden, dass die Überschneidung der vom Polygonzug umschlossenen Fläche und der im Kamerabild sichtbaren Reflektion (bzw. des Bereiches der Reflektion, die einen gewissen Helligkeitswert überschreitet) maximal wird bei gleichzeitiger Minimierung der vom Polygon umschlossenen Fläche.

In einem wieder anderen Beispiel ist auch denkbar, den Polygonzug so zu bestimmen, dass bei einer vorgegebenen Länge der geraden Linien oder einer vorgegebenen Anzahl der Punkte das Integral über den Abstand zwischen dem Polygonzug und der Abbildung der Reflexion im Kamerabild minimal wird.

Vorzugsweise umschließt jeder der Polygonzüge nur eine zusammenhängende Reflexion. Unter einer zusammenhängenden Reflexion werden hier solche Reflexionen verstanden, die im entsprechenden Kamerabild als zusammenhängende Fläche erscheinen.

Beispielsweise kann ein Polygonzug mittels der folgenden Schritte erstellt werden: Kontrastausgleich, optional Wandlung in ein Graustufenbild oder Auswahl eines Farbkanals, Thresholding zur Binarisierung, Morphologische Operation (Verbindung einzelner zusammenhängender weißer Pixelgruppen), Plausibilitätsprüfungen zum Verwerfen unsinniger oder nicht relevanter weißer Pixel (=Reflektionen), Berechnung des umschließenden Polygonzugs des verbliebenen weißen Pixelhaufens. Dieses Beispiel ist nur eine mögliche Ausführung. Zahlreiche Verfahren zur Bestimmung von Polygonzügen bezogen auf vorgegebene Formen sind bekannt.

Vorteilhaft können die Polygonzüge auch mittels folgender Schritte ermittelt werden. Für die Berechnung des Polygonzuges einer Reflektion kann zunächst der Kontrast des Kamerabildes normalisiert werden, dann das Bild binarisiert werden (sodass potentielle Reflektionen weiß sind und alles andere schwarz). Nachfolgend können unrealistische Reflektionskandidaten verworfen und schlussendlich wird mit dem Binärbild als Maske das Original-Kamerabild genau dort auf vertikale Kanten untersucht werden, wo das Binärbild weiß ist. Die zwei am stärksten ausgeprägten Kanten für jede x-Position im Kamerabild werden zu einem Polygonzug kombiniert, der die Reflektion umschließt (an Extrempunkten wird dann zu nur einem Wert für die stärkste Kante vereinfacht).

Erfindungsgemäß wird nun aus den zumindest zwei Kamerabildern eine zweidimensionale Repräsentierung erzeugt. In dieser werden in einer Dimension, im Folgenden als t-Dimension oder t-Richtung bezeichnet, die Zeitpunkte tᵢ aufgetragen, zu denen die zumindest zwei Kamerabilder erzeugt wurden. Jede Zeile dieser Repräsentierung in der t-Richtung entspricht also einem der Kamerabilder. Unterschiedliche der Kamerabilder entsprechen unterschiedlichen Zeilen. In der anderen Dimension der zweidimensionalen Darstellung, die im Folgenden als x-Dimension oder x-Richtung bezeichnet werden soll, wird eine Raumkoordinate aufgetragen, die senkrecht zu der Bewegungsrichtung steht. Diese x-Dimension entspricht vorzugsweise einer der Dimensionen der Kamerabilder. In diesem Falle verläuft dann die Bewegungsrichtung wie auch die x-Richtung in den Kamerabildern parallel zu einer der Kanten der Kamerabilder.

Als Wert an den Punkten (x, tᵢ) der zweidimensionalen Repräsentierung wird dann zumindest eine Eigenschaft des Polygonzugs am Ort x in dem Kamerabild, das zu dem entsprechenden Zeitpunkt tᵢ aufgenommen wurde, eingetragen. In einer vorteilhaften Ausgestaltung der Erfindung kann an jedem Punkt der zweidimensionalen Repräsentierung ein k-Tupel mit k ≥ 1 eingetragen werden, in welchem jede Komponente einer Eigenschaft des Polygonzugs entspricht. Jede Komponente des k-Tupels enthält also als Eintrag den Wert der entsprechenden Eigenschaft des Polygonzugs zum Zeitpunkt tᵢ am Ort x in dem zum Zeitpunkt tᵢ aufgenommenen Kamerabild.

Die zweidimensionale Repräsentierung erlaubt es nun, die Formmerkmale anhand des Verhaltens des zumindest einen Polygonzugs über die zumindest zwei Kamerabilder hinweg zu klassifizieren. Dabei soll zumindest eines der Formmerkmale dahingehend klassifiziert werden, ob es eine Verformung ist oder nicht eine Verformung ist. Vorteilhaft wird auf diese Weise zumindest ein Formmerkmal als Verformung klassifiziert. Hierzu können beispielsweise, wie weiter unten im Detail beschrieben, die zweidimensionalen Repräsentierungen einem neuronalen Netz vorgelegt werden, das mit für bekannte Formmerkmale aufgenommenen zweidimensionalen Repräsentierungen angelernt wurde.

In einer vorteilhaften Ausgestaltung der Erfindung kann die zumindest eine Eigenschaft des Polygonzugs, die in der zweidimensionalen Repräsentierung eingetragen wird, eine oder mehrere der folgenden sein: Eine mittlere Steigung des Polygonzugs an der x-Koordinate oder x-Position in der x-Dimension im Kamerabild tᵢ, ein Abstand zwischen zwei Abschnitten des Polygonzugs an der entsprechenden x-Koordinate oder x-Position in der x-Dimension im Kamerabild tᵢ, also ein Abstand in Richtung der tᵢ, und/oder eine Position des Polygonzugs in Richtung der tᵢ, also vorzugsweise in der Bewegungsrichtung. Als mittlere Steigung des Polygonzugs an einer gegebenen x-Koordinate oder x-Position kann dabei die Summe der Steigungen aller an der gegebenen x-Koordinate im Kamerabild tᵢ vorliegenden Abschnitte des Polygonzugs geteilt durch deren Anzahl gesehen werden. Es sei angemerkt, dass bei einem geschlossenen Polygonzug an jeder x-Koordinate, die vom Polygonzug durchlaufen wird, normalerweise zwei Abschnitte vorliegen, mit Ausnahme der in x-Richtung extremen Punkte. Entsprechend kann als Abstand zwischen zwei Abschnitten des Polygonzugs der Abstand zwischen den zwei Abschnitten des Polygonzugs angesehen werden, die an der gegebenen x-Koordinate vorliegen. Es kann hier vorteilhafterweise davon ausgegangen werden, dass an jeder x-Koordinate maximal zwei Abschnitte des gleichen Polygonzugs vorliegen. Als Position des Polygonzugs in der Bewegungsrichtung kann beispielsweise die Position eines Abschnitts des Polygonzugs oder aber auch die durchschnittliche Position zweier oder mehrerer Abschnitte des Polygonzugs an einer gegebenen x-Position angesehen werden.

Vorteilhafterweise wird das erfindungsgemäße Verfahren vor einem Hintergrund ausgeführt, der elektromagnetische Strahlung der Frequenz, mit der das Objekt im Beleuchtungsvorgang bestrahlt wird, im Wesentlichen nicht oder gar nicht reflektiert oder ausstrahlt. Dabei ist vorteilhafterweise der Hintergrund so angeordnet, dass das Objekt den Hintergrund dort in Richtung der zumindest einen Kamera reflektiert, wo es nicht das Licht der zumindest einen Beleuchtungseinrichtung in Richtung der zumindest einen Kamera reflektiert. Auf diese Weise wird erreicht, dass von dem Objekt nur solches Licht in die Kamera fällt, das entweder von der zumindest einen Beleuchtungseinrichtung ausgeht oder vom Hintergrund, so dass im Kamerabild die reflektierte Beleuchtungseinrichtung eindeutig vom Hintergrund unterschieden werden kann.

In einer bevorzugten Ausgestaltung der Erfindung kann im Rahmen des Verfahrens auch eine Vermessung der zumindest einen Verformung erfolgen. Hierfür ist es vorteilhaft, die zweidimensionale Repräsentierung in der t-Richtung, in welcher die tᵢ aufgetragen sind, in Abhängigkeit vom Abstand zwischen dem Objekt und der Kamera zu skalieren. Eine Skalierung im Sinne einer Vergrößerung des Abbilds der Verformung in der zweidimensionalen Repräsentierung kann beispielsweise dadurch erfolgen, dass Zeilen, die bestimmten tᵢ entsprechen, vervielfacht werden, während eine Skalierung im Sinne einer Verkleinerung beispielsweise dadurch erfolgen kann, dass einige Zeilen, die bestimmten tᵢ entsprechen, aus der zweidimensionalen Repräsentierung entfernt werden. Für den Fall, dass mehrere Kameras verwendet werden, kann eine solche Skalierung für die zweidimensionalen Repräsentierungen aller Kameras erfolgen, jeweils abhängig vom Abstand des Objekts von der entsprechenden Kamera.

In einer weiteren bevorzugten Ausgestaltung der Erfindung kann der Abstand der Objektoberfläche zur aufnehmenden Kamera zur Vermessung mit herangezogen werden. Die Distanz kann an verschiedenen Stellen für eine Skalierung sorgen, z.B. im rohen Kamera-RGB-Bild, in der 2D-Farbdarstellung in Y-Richtung und/oder X-Richtung, bei den fertig detektierten Abweichungen (beispielsweise beschrieben als Bounding-Boxes mit 2D-Positionskoordinaten).

Die Distanz kann verwendet werden um das Originalbild zu skalieren, die Repräsentation zu skalieren und/oder die finalen Schadensdetektionen zu skalieren (Beispiel: Schäden, die weiter weg sind erscheinen im Bild kleiner, der Schaden ist aber in der Realität genauso groß wie ein Schaden, der näher zur Kamera ist und größer erscheint). Die Skalierung erfolgt vorzugsweise in x und γ-Richtung. Die Distanz kann außerdem dazu verwendet werden, die Größe der Detektionen (auf der Repräsentation in Pixel) in mm bzw. cm anzugeben. Die Korrespondenz von Pixel zu Zentimeter ergibt sich aus den bekannten Abbildungseigenschaften der verwendeten Kamera (Brennweite usw.).

Man kann optional ebenso am Ende der Berechnung anhand der Abstandsinformation die Abbildung Pixel zu cm bestimmen und damit die eigentlich zu berechnende Größe der Formmerkmale erhalten.

In einer weiteren bevorzugten Ausgestaltung der Erfindung kann die zweidimensionale Repräsentierung anhand einer Geschwindigkeit des Objektes in Richtung der Bewegungsrichtung in der t-Dimension skaliert werden, um eine Vermessung der Formmerkmale oder Verformungen zu ermöglichen. Hierzu kann die Geschwindigkeit der Bewegung des Objektes während des Beleuchtungsvorgangs bzw. während des Beobachtungsvorgangs mittels zumindest eines Geschwindigkeitssensors bestimmt werden. Auch die Verarbeitung der Kamerabilder kann zur Geschwindigkeitsbestimmung herangezogen werden, indem sich bewegende Objekte im Bild detektiert und verfolgt werden.

Die zweidimensionale Repräsentierung kann in der t-Richtung, in welcher die ti aufgetragen sind, in Abhängigkeit von der Objektgeschwindigkeit skaliert werden. Eine Skalierung im Sinne einer Vergrößerung des Abbilds der Verformung in der zweidimensionalen Repräsentierung kann beispielsweise dadurch erfolgen, dass Zeilen, die bestimmten tᵢ entsprechen, vervielfacht werden, während eine Skalierung im Sinne einer Verkleinerung beispielsweise dadurch erfolgen kann, dass einige Zeilen, die bestimmten tᵢ entsprechen, aus der zweidimensionalen Repräsentierung entfernt werden. Für den Fall, dass mehrere Kameras verwendet werden, kann eine solche Skalierung für die zweidimensionalen Repräsentierungen aller Kameras erfolgen, jeweils abhängig von der Geschwindigkeit des Objekts im jeweiligen Kamerabild.

Hierzu kann die Geschwindigkeit der Bewegung des Objektes während des Beleuchtungsvorgangs bzw. während des Beobachtungsvorgangs mittels zumindest eines Geschwindigkeitssensors bestimmt werden. Eine solche Skalierung ist vorteilhaft, wenn Abmessungen der Verformungen bestimmt werden sollen, da bei Beibehaltung der Zeitpunkte tᵢ das Objekt mit unterschiedlichen Geschwindigkeiten zwischen zwei tᵢ unterschiedliche Strecken in der Bewegungsrichtung zurücklegt und daher in der zweidimensionalen Repräsentierung zunächst abhängig von der Geschwindigkeit unterschiedlich groß erscheint. Wird die zweidimensionale Repräsentierung in Richtung der tᵢ mit der Geschwindigkeit skaliert, so kann dies so erfolgen, dass der Abstand zwischen zwei Punkten in Richtung der tᵢ unabhängig von der Geschwindigkeit des Objektes einem bestimmten Abstand auf dem Objekt entspricht. Auf diese Weise lassen sich dann Formmerkmale oder Verformungen in ihrer Abmessung in Richtung der Bewegungsrichtung vermessen.

Vorteilhafterweise kann das Verfahren automatisch gesteuert werden, beispielsweise mittels Messwerten zumindest eines Steuerungssensors. Ein solcher kann beispielsweise eine Lichtschranke sein, mit deren Signal das Verfahren gestartet und/oder beendet wird, wenn das Objekt in den Messbereich der Lichtschranke gerät. Eine solche Lichtschranke kann beispielsweise am Eingang und/oder am Ausgang eines Messbereichs angeordnet sein. Der Messbereich kann jener Bereich sein, in dem das Objekt durch die zumindest eine Kamera beobachtet wird.

In einer vorteilhaften Ausgestaltung der Erfindung weist die Beleuchtungseinrichtung zumindest oder genau eine Lichtleiste auf oder ist eine solche. Unter einer Lichtleiste wird hierbei eine längliche, vorzugsweise gebogen verlaufende, Lichtquelle verstanden, die in einer Richtung, ihrer Längsrichtung, deutlich größer ausgedehnt ist, als in ihren hierzu senkrechten Richtungen. Eine solche Lichtleiste kann dann vorzugsweise den Bereich zumindest teilweise umlaufen, durch den das Objekt während des Beleuchtungsvorgangs bewegt wird. Es ist dann bevorzugt, wenn die zumindest eine Kamera an der Lichtleiste so montiert ist, dass eine Blickrichtung der Kamera von einem Punkt auf oder unmittelbar angrenzend an die Lichtleiste ausgeht. Bevorzugterweise verläuft dabei die Blickrichtung der Kamera in einer von der Lichtleiste aufgespannten Ebene oder in einer Ebene parallel zu dieser. Auf diese Weise kann gewährleistet werden, dass weitgehend unabhängig von der Form des Objektes stets Licht auch in die Kamera reflektiert wird. Dies kann, abhängig von der Form des Objektes, von unterschiedlichen Punkten entlang der Lichtleiste ausgehen.

In einer vorteilhaften Ausgestaltung kann das erfindungsgemäße Verfahren einen weiteren Bestimmungsschritt aufweisen, in dem eine Position und/oder eine Größe der Verformung oder des Formmerkmales bestimmt wird. In diesem Falle ist es insbesondere vorteilhaft, wenn die zweidimensionale Repräsentierung mit der Geschwindigkeit des Objektes und/oder dem Abstand des Objektes von der Kamera skaliert wird. Zur Bestimmung der Position und/oder der Größe der Verformung kann vorteilhafterweise zumindest eine Form und/oder Größe des zumindest einen Polygons und/oder einer Abbildung zumindest eines auf dem Objekt angebrachten Markers verwendet werden. Bei der Verwendung von Markern können diese auf der Oberfläche des Objektes oder in der Nähe angebracht werden.

Zur Bestimmung der Position und/oder der Größe der Verformung kann vorteilhafterweise zumindest eine Form und/oder Größe des zumindest einen Polygons und/oder ein auf dem Objekt angebrachter und im Kamerabild sichtbare Marker, dessen reale Abmessungen bekannt sind und der vorteilhafterweise auch ein im Kamerabild erkennbares Lineal beinhaltet, im Kamerabild detektiert und verwendet werden. Der Marker kann zum Beispiel mittels Bilderverarbeitung erkannt werden. Vorteilhaft kann seine Größe bekannt sein und mit benachbarten Verformungen verglichen werden.

Der Polygonzug kann eine bestimmte horizontale Breite haben, über die das Objekt in seiner Gesamtgröße eingeschätzt werden kann.

Der Marker erscheint vorzugsweise nur im Kamerabild und dient vorzugsweise zur Skalierung und wird bevorzugt nicht in die 2D-Repräsentierung übertragen. Beispielsweise kann ein Marker auf einer Motorhaube, einem Dach und einem Kofferraum verwendet werden, um Segmente eines Autos grob zu erkennen.

Die Position und Größe eines Formmerkmales oder einer Verformung kann auch mittels eines neuronalen Netzes detektiert werden. Hierzu kann die zweidimensionale Repräsentierung dem neuronalen Netz eingegeben werden. Diese Bestimmung von Position und/oder Größe kann auch durch das neuronale Netz erfolgen, das die Formmerkmale klassifiziert.

In einer vorteilhaften Ausgestaltung der Erfindung kann in einem Zuordnungsvorgang die zweidimensionale Repräsentierung oder Bereiche der zweidimensionalen Repräsentierung Einzelteilen des Objektes zugeordnet werden. Hierzu kann beispielsweise das Objekt in den Kamerabildern segmentiert werden. Dies kann zum Beispiel dadurch erfolgen, dass die Kamerabilder mit Forminformationen über das Objekt verglichen werden. Die Segmentierung kann auch mittels Sensormessung und/oder mittels auf dem Objekt angebrachter Marker erfolgen.

Im Falle eines Kraftfahrzeuges kann die Segmentierung beispielsweise wie folgt erfolgen: 3D-CAD-Daten beschreiben Autos mit Motorhaube, Dach, Kofferraum, die Marker identifizieren diese drei Teile. Zusätzlich können Fensterbereiche durch die glatte Reflektion und deren Krümmung erkannt werden. Die Segmentierung kann auch mit NN rein Bildbasiert erfolgen. Oder man kann vorteilhaft die 3D-CAD-Daten in ein 2D-Bild rendern, wenn die Blickrichtung der Kamera bekannt ist, und dieses dann mit dem Kamerabild vergleichen.

Ein weiteres Beispiel für eine Zuordnung von Bereichen der zweidimensionalen Repräsentierung zu Einzelteilen des Objektes kann erfolgen, indem man das Verhalten der Reflektion beobachtet (Krümmung, Dicke, usw., implizit also Forminformationen) oder mit Hilfe von Machine-Learning Algorithmen z.B. NNs., oder man schreibt vor, die Marker auf bestimmten Bauteilen des Objekts anzubringen.

Das erfindungsgemäße Verfahren ist besonders vorteilhaft anwendbar auf Kraftfahrzeuge. Besonders vorteilhaft ist es außerdem anwendbar, wenn die Verformungen Beulen in einer Oberfläche des Objektes sind. Das Verfahren kann also beispielsweise verwendet werden, um Beulen in der Karosserie von Kraftfahrzeugen zu bestimmen, ermitteln und/oder vermessen.

Erfindungsgemäß werden die Formmerkmale klassifiziert anhand des Verhaltens des zumindest einen Polygonzugs, der dem entsprechenden Formmerkmal zugeordnet ist, über die zumindest zwei Kamerabilder hinweg. Diese Klassifizierung kann besonders vorteilhaft mittels zumindest eines neuralen Netzes erfolgen. Besonders vorteilhaft kann hierzu die zweidimensionale Repräsentierung dem neuronalen Netz vorgegeben werden und das neuronale Netz kann die in der zweidimensionalen Repräsentierung abgebildeten Formmerkmale klassifizieren. Eine vorteilhafte Klassifizierung kann beispielsweise darin liegen, ein gegebenes Formmerkmal als eine Beule seiend oder nicht eine Beule seiend zu klassifizieren.

Vorteilhafterweise kann dabei das neuronale Netz angelernt werden oder angelernt worden sein, indem ihm eine Vielzahl von Formmerkmalen mit bekannter oder vorgegebener Klassifizierungen vorgegeben werden und das neuronale Netz so angelernt wird, dass eine zweidimensionale Repräsentierung der Formmerkmale mit vorgegebener Klassifizierung in der vorgegebenen Weise klassifiziert wird. Es können also beispielsweise zweidimensionale Repräsentierungen vorgegeben werden, die dadurch erzeugt wurden, dass ein Objekt mit entsprechend zu klassifizierenden Formmerkmalen, beispielsweise ein Kraftfahrzeug mit Beulen, wie vorstehend für das erfindungsgemäße Verfahren beschrieben, beleuchtet wird und mittels zumindest einer Kamera beobachtet wird, und aus den so aufgenommenen Kamerabildern wie vorstehend für das erfindungsgemäße Verfahren beschrieben für die Formmerkmale in den Kamerabildern jeweils ein Polygonzug bestimmt wird. Es kann dann aus den zumindest zwei Kamerabildern eine zweidimensionale Repräsentierung erzeugt werden, in welcher in einer Dimension die Zeitpunkte t'ᵢ aufgetragen sind, zu denen die Kamerabilder erzeugt wurden und in der anderen der zwei Dimensionen die Raumkoordinate senkrecht zu der Bewegungsrichtung aufgetragen ist. Es gilt hier das oben Gesagte entsprechend. Als Wert wird dann an den Punkten der zweidimensionalen Repräsentierung wiederum die zumindest eine Eigenschaft des Polygons eingetragen. Es werden dabei vorzugsweise die gleichen Eigenschaften verwendet, die bei der eigentlichen Vermessung des Objektes vermessen werden. Auf diese Weise werden also zweidimensionale Repräsentierungen erzeugt, die die Formmerkmale widerspiegeln, die das Objekt aufwies.

Das Anlernen kann auch mit aus Abbildungen des Objektes erzeugten zweidimensionalen Repräsentierungen erfolgen. Hier können in den Abbildungen Verformungen vorgegeben werden, die so gestaltet werden, dass sie Abbildungen tatsächlicher Verformungen in den Kamerabildern entsprechen. Die so erzeugte zweidimensionale Repräsentierung kann dann zusammen mit den Klassifizierungen dem Neuronalen Netz vorgegeben werden, so dass dieses die Klassifizierungen für die vorgegebenen Verformungen lernt. Sollen die Verformungen Beulen, beispielsweise in der Oberfläche eines Kraftfahrzeugs sein, so können diese in den Bildern beispielsweise mittels der WARP-Funktion erzeugt werden.

Da im Anlernschritt die Klassifizierung dieser Formmerkmale, also beispielsweise als Beule oder Nicht-Beule, bekannt ist, kann das neuronale Netz mit den zweidimensionalen Repräsentierungen einerseits und den vorgegebenen bekannten Klassifizierungen andererseits angelernt werden.

Erfindungsgemäß wird außerdem eine Vorrichtung zur Bestimmung von Verformungen an einem Objekt angegeben. Eine solche weist zumindest eine Beleuchtungseinrichtung auf, mit der ein Messbereich, durch den das Objekt bewegbar ist, mit elektromagnetischer Strahlung zumindest einer solchen Frequenz beleuchtbar ist, dass das Objekt die elektromagnetische Strahlung als reflektierte Strahlung reflektiert. Für die Beleuchtungsvorrichtung gilt das zum Verfahren Gesagte entsprechend. Die Beleuchtung kann vorteilhaft hinter einer Blende montiert sein, um sie für die im Kamerabild erscheinende Reflektion zu fokussieren.

Darüber hinaus weist die erfindungsgemäße Vorrichtung zumindest eine Kamera auf, mit der das Objekt beobachtbar ist, während es durch den Messbereich bewegt wird. Für die Kamera und deren Orientierung relativ zur Beleuchtungsvorrichtung gilt das zum Verfahren Gesagte entsprechend.

Mit der zumindest einen Kamera sind durch die Beobachtung zumindest zwei Kamerabilder zu unterschiedlichen Zeitpunkten tᵢ, i ∈ N, i = 1,..., n erzeugbar, welche die jeweils reflektierte Strahlung abbilden.

Die Vorrichtung weist erfindungsgemäß außerdem eine Auswerteeinheit auf, mit der in den Kamerabildern zumindest ein Formmerkmal des Objektes erkennbar ist, wobei für zumindest eines der zumindest einen Formmerkmale in den zumindest zwei Kamerabildern jeweils ein Polygonzug bestimmbar ist. Die Auswerteeinheit kann dann eingerichtet sein, aus den zumindest zwei Kamerabildern eine zweidimensionale Repräsentierung zu erzeugen, in welcher in einer Dimension die Zeitpunkte tᵢ aufgetragen sind, zu denen die zumindest zwei Kamerabilder erzeugt wurden, und in der anderen Dimension die Raumkoordinate senkrecht zu der Bewegungsrichtung aufgetragen ist, besonders bevorzugt senkrecht zur Bewegungsrichtung, wie sie im von der Kamera aufgenommenen Bild erscheint. Besonders bevorzugt liegt diese x-Richtung parallel zu einer der Kanten des Kamerabildes.

Als Wert kann die Auswerteeinheit wiederum an den Punkten der zweidimensionalen Repräsentierung zunächst eine Eigenschaft des Polygonzugs in dem Kamerabild zum Zeitpunkt tᵢ an Ort x eintragen. Auch hier gilt das zum Verfahren Gesagte analog.

Die Auswerteeinheit kann dann eingerichtet sein, die Formmerkmale anhand des Verhaltens des zumindest einen Polygonzugs über die zumindest zwei Kamerabilder hinweg zu klassifizieren. Vorteilhafterweise kann hierzu die Auswerteeinheit ein neuronales Netz aufweisen, das besonders bevorzugt wie vorstehend beschrieben angelernt wurde.

Es ist bevorzugt, wenn die erfindungsgemäße Vorrichtung eingerichtet ist, ein wie vorstehend beschrieben ausgestaltetes Verfahren auszuführen. Die Verfahrensschritte könnten hierbei, soweit sie nicht durch die Kamera oder die Beleuchtungseinrichtung ausgeführt werden, durch eine geeignet eingerichtete Auswerteeinheit ausgeführt werden. Diese kann beispielsweise ein Rechner, ein Computer, ein entsprechender Microcontroller oder eine intelligente Kamera sein.

Im Folgenden soll die Erfindung anhand einiger Figuren beispielhaft erläutert werden.

Es zeigt:
- Figur 1: eine beispielhafte Ausgestaltung der erfindungsgemäßen Vorrichtung,
- Figur 2: ein beispielhaftes Ablaufdiagramm zur Bestimmung eines Polygonzugs im erfindungsgemäßen Verfahren, und
- Figur 3: ein beispielhaftes Vorgehen zur Erstellung einer zweidimensionalen Repräsentierung,
- Figur 4: beispielhaft eine zweidimensionale Repräsentierung, welche im erfindungsgemäßen Verfahren erzeugbar ist,
- Figur 5: ein beispielhaftes Kamerabild und
- Figur 6: ein Endergebnis eines beispielhaften erfindungsgemäßen Verfahrens.

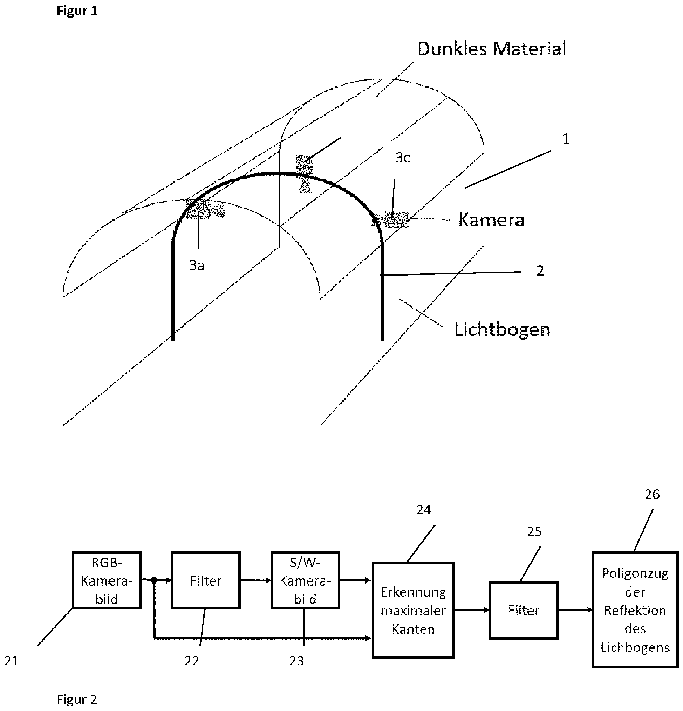

Figur 1 zeigt ein Beispiel einer erfindungsgemäßen Vorrichtung, in der ein erfindungsgemäßes Verfahren zur Bestimmung von Verformungen an einem Objekt ausführbar ist. Im in Figur 1 gezeigten Beispiel weist die Vorrichtung einen Hintergrund 1 auf, der hier als Tunnel mit zwei zueinander parallelen Wänden und einem runden Dach, beispielsweise einem kreiszylinderabschnittsförmigen Dach, ausgebildet ist. Der Hintergrund 1 weist im gezeigten Beispiel auf seiner inneren Oberfläche eine Farbe auf, die sich von einer Farbe deutlich unterscheidet, mit der eine Beleuchtungseinrichtung 2, hier ein Lichtbogen 2, ein Objekt im Inneren des Tunnels beleuchtet. Erzeugt beispielsweise die Beleuchtungseinrichtung 2 sichtbares Licht, so kann vorteilhafterweise der Hintergrund auf seiner inneren Oberfläche, die dem Objekt zugewandt ist, einen dunklen oder schwarzen Hintergrund haben. Das Objekt ist in Figur 1 nicht eingezeichnet.

Der Lichtbogen 2 erstreckt sich im gezeigten Beispiel in einer Ebene, die senkrecht zu einer Bewegungsrichtung steht, mit der sich das Objekt durch den Tunnel 1 hindurch bewegt. Der Lichtbogen erstreckt sich hier im Wesentlichen über die gesamte Erstreckung des Hintergrunds 1 in dieser Ebene, was jedoch nicht erforderlich ist. Es ist auch ausreichend, wenn der Lichtbogen 2 sich nur auf einem Teilabschnitt der Erstreckung des Hintergrundes in dieser Ebene erstreckt. Alternativ kann auch die Beleuchtungseinrichtung 2 auch ein oder mehrere Einzellichtquellen aufweisen.

Im in Figur 1 gezeigten Beispiel sind an dem Lichtbogen drei Kameras 3a, 3b und 3c angeordnet, die einen Messbereich beobachten, in dem das Objekt, wenn es in der Bewegungsrichtung durch den Tunnel 1 bewegt wird, durch die zumindest eine Beleuchtungseinrichtung beleuchtet wird. Die Kameras erfassen dann jeweils das von der Beleuchtungseinrichtung 2 ausgehende und vom Objekt reflektierte Licht und erzeugen zu zumindest zwei Zeitpunkten jeweils Kamerabilder von den Reflektionen. Im gezeigten Beispiel erstrecken sich die Blickrichtungen der Kameras 3a, 3b, 3c in der Ebene, in der sich der Lichtpunkt 2 erstreckt oder in einer dazu parallelen Ebene. Die mittlere Kamera 3b blickt senkrecht nach unten und die seitlichen Kameras 3a und 3c blicken in Richtung senkrecht zu der Blickrichtung der Kamera 3b auf gleicher Höhe aufeinander zu. Es sei darauf hingewiesen, dass auch weniger Kameras oder mehr Kameras verwendet werden können, deren Blickrichtungen auch anders orientiert sein können.

Die Kameras 3a, 3b und 3c erzeugen jeweils Kamerabilder 21, in denen, wie in Figur 2 beispielhaft gezeigt, Polygonzüge ermittelt werden können. Figur 2 zeigt, wie in einem der Kamerabilder 21 ein Polygonzug der Reflektion des Lichtbogens 2 auf der Oberfläche des Objektes bestimmbar ist. Die Reflexionen werden dabei durch Formmerkmale des Objektes erzeugt. Es wird das Kamerabild 21 hierbei durch einen Filter 22 bearbeitet, der beispielsweise aus dem farbigen Kamerabild 21 ein Graustufenbild 23 erzeugt. Ein solches kann beispielsweise ein Falschfarbenbinärbild sein. Es kann hierbei aus den sich ergebenden Graustufen durch Vergleich mit einem Schwellenwert ein binäres Bild erzeugt werden, indem beispielsweise alle Pixel mit Graustufen oberhalb des Schwellenwertes den einen Wert annehmen und alle Pixel mit Graustufen unterhalb des Schwellenwertes den anderen Wert. In einer weiteren Filterung können außerdem alle Pixel auf Null gesetzt werden, die nicht durch eine Reflektion erzeugt wurden. Aus dem Filter kann sich so beispielsweise ein Schwarz-Weiß-Kamerabild 23 ergeben.

Auf dem so erzeugten Schwarz-Weiß-Kamerabild 23 kann zusammen mit dem ursprünglichen Kamerabild 21 eine Kantenerkennung 24 ausgeführt werden. Das so ermittelte Kantenbild kann dann in einen weiteren Filter 25 eingegeben werden, der einen Polygonzug 26 der Reflektion des Lichtbogens 2 erzeugt.

Die maximale Kantenerkennung durchläuft beispielsweise das RGB-Kamerabild anhand der weißen Pixel im Schwarz/Weißbild und detektiert für jede X-Position die zwei am stärksten ausgeprägten Kanten (Ober- und Unterkante der Reflektion). Filter 25 fügt diese Kanten zu einem Polygonzug zusammen. Weitere Plausibilitätsprüfungen können Fehlreflektionen ausschließen, so dass am Ende nur der Polygonzug der Reflektion der Beleuchtungsquelle übrig bleibt.

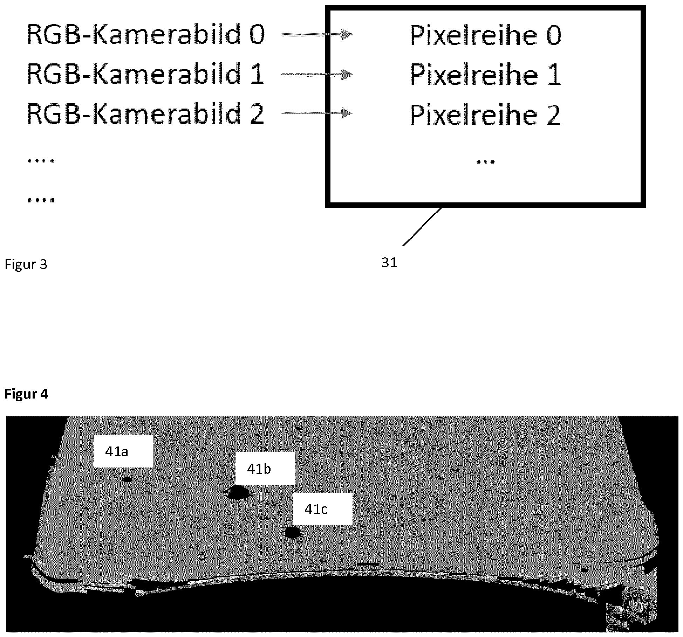

Figur 3 zeigt beispielhaft, wie aus den zu unterschiedlichen Zeitpunkten ti erzeugten Kamerabildern 21 eine zweidimensionale Repräsentierung 31 erstellt wird. In der zweidimensionalen Repräsentierung 31 entspricht jede Zeile einem Kamerabild zu einer Zeit ti, wobei i = 1,...n ist. Jede Zeile der zweidimensionalen Repräsentierung 31 kann also einem der i entsprechen. In der horizontalen Richtung kann in der zweidimensionalen Repräsentierung 31 eine x-Koordinate aufgetragen sein, die vorzugsweise einer Koordinate der Kamerabilder 21 entspricht, die besonders bevorzugt senkrecht zur Bewegungsrichtung in dem Kamerabild 21 steht. Im gezeigten Beispiel können nun für jeden Punkt in der zweidimensionalen Repräsentierung 31 beispielsweise ein mittlerer Gradient bzw. eine mittlere Steigung des Polygonzugs 26 im Kamerabild zur Zeit ti am Punkt x eingetragen werden und/oder beispielsweise eine vertikale Dicke des Polygonzugs, also eine Dicke in Richtung senkrecht zur x-Richtung im Kamerabild, eingetragen werden. Als weiterer Wert könnte auch eine y-Position des Polygonzugs, also eine Position in Richtung senkrecht zur x-Richtung in dem Kamerabild eingetragen werden, zum Beispiel in der dritten Eigenschaft kodiert werden. Eine Kodierung der y-Position des Polygonzugs als vertikale y-Verschiebung in der 2D-Repräsentierung in Kombination mit den y-Positionen der Kamerabilder tᵢ ist ebenfalls möglich, allerdings in Figur 3 nicht abgetragen. Vorteilhaft kann die zweidimensionale Repräsentierung 31 als Farbbild gespeichert werden, in dem die Farbkomponenten Rot, Blau oder Grün die Werte unterschiedlicher Eigenschaften des Polygonzugs tragen. Beispielsweise könnte in der Grün-Komponente der Gradient bzw. die genannte mittlere Steigung des Polygonzugs abgelegt werden und in der Blau-Komponente die vertikale Dicke des Polygonzugs.

Figur 4 zeigt beispielhaft eine derart erzeugte zweidimensionale Rekonstruierung. Figur 4 enthält erkennbare gekrümmte Linienzüge, die aus der y-Verformung der Reflektionen im Kamerabild entstehen. Zu erkennen sind zahlreiche Formmerkmale, von denen drei als Verformungen 41a, 41b und 41c besonders ausgeprägt sind. Diese erscheinen in der zweidimensionalen Repräsentierung mit einem anderen Farbwert als jene Bereiche, in denen keine Verformung vorliegt.

Derartige zweidimensionale Repräsentierungen können verwendet werden, um ein neuronales Netz anzulernen. In einem konkreten Beispiel wird das Verhalten der Reflektionen in diese 2D-Repräsentierung automatisch umgewandelt. Dort werden die Verformungen (beispielsweise manuell) bestimmt und annotiert. Es braucht dann letztlich nur die 2D-Repräsentierung mit ihren Markern trainiert zu werden. Auf der 2D-Repräsentierung werden direkt Marker aufgemalt (z.B. copy/paste). Diese sind leicht automatisch zu erkennen (da sie vorzugsweise immer gleichförmig sind) und beispielsweise in eine XML-Repräsentation der Beulenpositionen auf der 2D-Repräsentierung umzuwandeln. Das ist dann erst die Grundlage für das Training des Neuronalen Netzes (NN). In der späteren Anwendung des NN gibt es dann nur noch die 2D-Repräsentierung und keine Marker mehr.

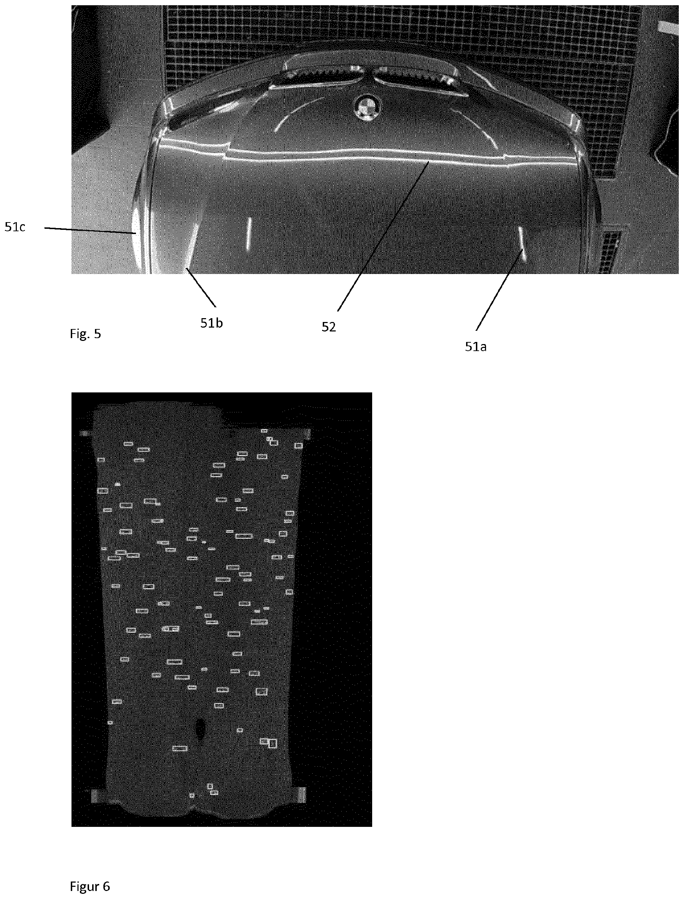

Figur 5 zeigt beispielhaft ein Kamerabild, das hier von einer Motorhaube eines Autos aufgenommen wurde. Zu erkennen sind zahlreiche Reflexionen, von denen einige als 51a, 51b, 51c, und 52 markiert sind. Die Reflexionen entstehen dadurch, dass Formmerkmale der Motorhaube, wie beispielsweise Knicke und Flächen die Beleuchtungsquelle reflektieren. Auf den flächigen Teilen der Motorhaube spiegelt sich eine streifenförmige Beleuchtungseinheit und erzeugt im Kamerabild die Reflexionen 52, die hier im flachen Bereich als zwei Streifen erscheint, an den Knicken aber Stufen aufweist.

Die Reflektionen können dann mit Polygonen umgeben werden, die wie vorstehend beschrieben weiterverarbeitet werden können.

Figur 6 zeigt beispielhaft ein Endergebnis eines beispielhaften erfindungsgemäßen Verfahrens. Hier bildet eine zweidimensionale Repräsentierung den Hintergrund des Bildes, auf dem erkannte Verformungen durch Rechtecke markiert sind. Als zu erkennenden Verformungen sind hier Hagelbeulen vorgegeben. Durch Anwendung des neuronalen Netzes wurden alle Hagelbeulen als Verformungen ermittelt und mit einem Rechteck versehen.

Die hier vorliegende Erfindung zielt vorteilhaft auf den mobilen Low-Cost-Markt ab, welcher einen möglichst schnellen Auf- und Abbau wie auch möglichst schnelle Messungen erfordert und damit alle oben genannten Nachteile eliminiert. Beispielsweise kann vorzugsweise die Begutachtung eines Hagelschadens an Fahrzeugen je nach Wettervorfall an wechselnden Standorten und mit einem hohen Durchsatz erfolgen. Einige existierende Ansätze verwenden vergleichbar mit der vorliegenden Erfindung die Aufzeichnung der Reflektionen von Lichtmustern, bei denen teilweise das Objekt auch bewegt werden kann (Ein Experte oder auch der Besitzer selbst fährt das Auto unter der Vorrichtung durch).

Die Besonderheit der hier vorgestellten Erfindung im Unterschied zu existierenden Ansätzen besteht in der Berechnung einer 2D-Rekonstruktion oder 2D-Repräsentierung als Beschreibung des Verhaltens der Reflektion über die Zeit, in der Formabweichungen besonders gut erkennbar sind. Dieses Verhalten entsteht erst durch das Bewegen des zu untersuchenden Objekts bzw. der Vorrichtung. Da hier nur das Verhalten der Reflektion über die Zeit relevant ist, kann man sich beispielsweise im Unterschied zu existierenden Systemen auf einen einzigen Lichtbogen als Quelle für die Reflektion beschränken.

Die Rekonstruktion bzw. Repräsentierung ist eine für Menschen interpretierbare Visualisierung dieses Verhaltens und nicht notwendig zwingend proportional zu der untersuchten Objektform zuordenbar. So wird beispielsweise nicht die Tiefe einer Abweichung, wohl aber bevorzugt ihre Größe ermittelt. Sie erweist sich als ausreichend für eine Begutachtung.

Im Folgenden soll ein beispielhafter Ablauf des Verfahrens nochmals kurz zusammengefasst werden. Dieser Ablauf ist vorteilhaft, kann jedoch auch anders realisiert werden.
1. Ein oder mehrere Lichtquellen vorgegebener Form (z.B. leistenartig), werden vorgesehen, die einen für die Messung vorgesehenen Raum umspannen. Die Lichtquellen können beispielsweise die Form einer Lichtleiste haben, welche bogenförmig den vorgesehenen Raum umschließen. Das Licht kann im nicht sichtbaren Spektrum liegen, weiß oder in jeder anderen Farbe ausstrahlen.
2. Ein zum Licht kontrastreiches Material wird im Hintergrund der Lichtquellen vorgegeben. Das Material kann beispielsweise im Falle von weißem Licht ein dunkler Stoff sein, welcher vor dem Einsatz über dem vorgesehenen Raum aufgespannt wird.
3. Zu vermessende Objekte passieren diesen Raum. Hierfür kann sich das Objekt durch den vorgesehenen Raum bewegen, oder eine Vorrichtung über dem ruhenden Objekt entlang des vorgesehenen Raumes fahren.
4. Ein oder mehrere Sensoren werden vorteilhaft innerhalb des umspannten Raumes für die Messung der Distanz zur Objektoberfläche vorgesehen.
5. Ein oder mehrere Sensoren zur Steuerung der Messung können vorgesehen sein. Dies kann beispielsweise einer Lichtschranke sein, mit der die Messung gestartet und wieder gestoppt wird, sobald das Objekt den umspannten Raum passiert bzw. verlässt.
6. Eine oder mehrere Kameras sind vorhanden, die innerhalb des umspannten Raumes auf das zu untersuchende Objekt gerichtet sind und die Reflektionen der Lichtquellen erfassen. Die Kameras können hochauflösend (z.B. 4K oder mehr) sein oder auch mit höheren Frameraten arbeiten (z.B. 100Hz oder mehr)
7. Ein Algorithmus oder Sensor, welcher die Richtung und Geschwindigkeit des Objektes im umspannten Raum ermittelt, kann verwendet werden.
8. Ein Algorithmus zur Qualitätsmessung der berechneten 2D-Repräsentation auf Basis von
   i. Bildverarbeitung
   ii. auf der Objektoberfläche angebrachten Markern
   iii. Sensorwerten
   kann verwendet werden.
   Solche Sensoren können beispielsweise die Geschwindigkeit messen, mit der das Objekt die Kameras passiert und damit einen Hinweis auf den minimal sichtbaren Bewegungsschritt zwischen zwei Bildern der Kamera oder die Bewegungsunschärfe in den Bildern geben.
9. Ein Algorithmus kann eingesetzt werden, welcher den umgrenzenden Polygonzug jeder Lichtreflektion im Kamerabild berechnet.
   Der Algorithmus kann u.a. Verfahren zur Binarisierung, Kantenerkennung (z.B. Canny Edge), wie auch Rauschfilter bzw. heuristische Filter enthalten.
10. Ein Algorithmus kann verwendet werden, welcher eine 2D-Repräsentation der Objektoberfläche aus dem Verhalten der Polygonzüge berechnet.
   Diese Repräsentation visualisiert das Verhalten der Polygonzüge bei Objektoberflächen, die der erwarteten Form entsprechen, sowie deren Abweichungen davon in unterschiedlicher Darstellung. Eine Ausführungsform kann beispielsweise eine Fehlfarben- oder Graustufendarstellung sein. Die Repräsentation muss nicht proportional zu den Objektoberflächen oder in gleicher Detailgenauigkeit sein. Es ist keine Information über eine zu erwartenden Form notwendig. Liegt diese Information vor, so kann sie herangezogen werden.
11. Ein Algorithmus kann verwendet werden, welcher aufgrund der 2D-Repräsentation anwendungspezifische Abweichungen der Objektoberflächenformen ermittelt. Die Abweichungen ergeben sich z. B. aus
   a. anwendungspezifischen Vorannahmen über Form und Verhalten der Reflektionen. Glatte Oberflächen erzeugen beispielsweise glatte, rausch- und verzerrungsarme Reflektionen. In diesem Fall wären erwartete Formen verfügbar.
   b. Vergleichen von Form und Verhalten der Reflektion auf Basis einer Referenzmessung einer formgleichen Objektserie oder desselben Objektes im Vorfeld einer Verwendung. Hierfür kann die Referenzmessung beispielsweise in Verbindung mit einer Objektseriennummer oder Typnummer (bei Fahrzeugen einem Nummernschild) in einer Datenbank gespeichert werden. Auch hier könnten erwartete Formen verwendet werden.
   c. Der Anwendung eines trainierten Neuronalen Netzes, das genau diesen Typ von Abweichungen der Objektoberflächenformen an der 2D-Repräsentierung erkennt. Hierfür liegt normalerweise kein erwartete Form der Abweichung vor.
   Um die Abweichung mit einem trainierten Algorithmus (Neuronales Netz) zu erkennen und zu klassifizieren ist es vorteilhaft, wenn bekannt ist, wie sie aussieht. Es ist also vorteilhaft, eine erwartete Form der Abweichung zu kennen. Die Genaue Form des Objektes ist hingegen nicht nötig (z.B. können Dellen auf Dach und Motorhaube eines Kraftfahrzeuges erkannt werden, ohne, dass die Information Dach/Motorhaube vorhanden ist).
12. Ein Algorithmus kann optional verwendet werden zur Bestimmung von Position und Größe der Abweichungen, basierend auf einer Messung
   a. der Form oder Größe der Lichtreflektion
   b. eines in Form und Größe bekannten und auf der Objektoberfläche angebrachten Markers. Der Marker kann beispielsweise die Form eines Kreises, Rechtecks, Kreuzes etc. besitzen und in einer bekannten Farbe vorliegen.
   c. von Sensorwerten (z.B. Distanzsensoren)
13. Ein Algorithmus kann eingesetzt werden zur Zuordnung der 2D-Repräsentation zu verschiedenen Einzelteilen des Objektes auf Basis von
   i. Segmentierung des Objektabbildes im Kamerabild (z.B. durch trainierte neuronale Netze)
   ii. Vergleichen mit vorliegenden 2D oder 3D Forminformationen zum Objekt (z.B. CAD-Daten, 3D-Scans)
   iii. Sensormessung
   iv. auf der Objektoberfläche angebrachten Markern.

Wenn die Geschwindigkeit der Objekte gemessen wird, kann die 2D-Farbdarstellung in der vertikalen Größe normalisiert werden, indem eine Pixelreihe je nach Geschwindigkeit vervielfacht ins Bild geschrieben wird.

Neben Gradient und vertikaler Dicke des Polygonzugs kann vorteilhaft auch seine y-Position an jeder Stelle x im Kamerabild in die 2D-Farbdarstellung kodiert werden. D.h. die y-Position der Kodierung eines Polygonzugs in der 2D-Farbdarstellung kann abhängen von z.B.:
» der Frame-Nummer des Kameravideos
» der Geschwindigkeit des Objektes (=Anzahl verwendeter vertikaler Pixel pro Kamerabild)
• und **zusätzlich** y-Position des Polygonzugs im Kamerabild jeweils an der Stelle x.

Diese Variante ist in Figur 3 nicht dargestellt, jedoch in Figur 4. Sie verstärkt die Erscheinung von Objektformabweichungen in der 2D-Farbdarstellung.

Zur Unterstützung der Erzeugung von Trainingssets (=annotierte Videos) für das Neuronale Netz kann man auch auf virtuelle 3D Objekte (für die Hagelschadenerkennung 3D-Automodelle) grafisch rendern oder fertige Bilder der Objektoberfläche (für die Hagelschadenerkennung Autobilder) verwenden, auf denen man mit mathematischen 2D-Funktionen beispielsweise künstlich Hagelschäden erzeugt (für die Hagelschadenerkennung WARP-Funktionen).

Im folgenden soll beispielhaft ausgeführt werden, wie die zweidimensionale Repräsentierung oder Teile der zweidimensionalen Repräsentierung jeweils Einzelteilen des Objektes zugeordnet werden können.
1. Ein trainiertes Neuronales Netz bekommt das Kamerabild als Input, detektiert eventuelle Komponenten des Objektes und markiert deren Größe und Position (mögliche Annotationsarten sind Bounding Boxen und schwarz-weiß-Masken für jede Komponente)
2. Das Verhalten der Reflektion wird untersucht - falls bekannt ist, dass bestimmte Komponenten des Objektes ein gewisses Reflektionsverhalten verursachen (gerade Flächen verursachen eine gerade Reflektion, stark gekrümmte Flächen verursachen eine gekrümmte Reflektion), kann anhand des Verhaltens der Reflektion eine Klassifizierung der Komponenten vorgenommen werden.
3. Falls CAD-Daten oder generelle Abstandsinformationen zum Aufbau bekannt sind, kann basierend auf der Distanzinformation vorhergesagt werden, ob sich direkt gegenüber der Kamera kein Objekt/eine gewisse Komponente des Objektes befindet.
4. Es können bekannte und einfach im Kamerabild zu detektierende Marker zu Beginn/Ende/an den Ecken der Komponenten aufgebracht werden. Basierend auf der bekannten Position der Marker können dann Rückschlüsse auf die Position der Komponente des Objektes gezogen werden.

## Patentansprüche

1. Verfahren zur Bestimmung von Verformungen an einem Objekt, wobei in einem Beleuchtungsvorgang das Objekt mittels zumindest einer Beleuchtungseinrichtung (2) mit elektromagnetischer Strahlung zumindest einer solchen Frequenz bestrahlt wird, dass das Objekt die elektromagnetische Strahlung als reflektierte Strahlung reflektiert, wobei das Objekt und die zumindest eine Beleuchtungseinrichtung (2) während des Beleuchtungsvorgangs gegeneinander in einer Bewegungsrichtung bewegt werden,
wobei in einem Beobachtungsvorgang das Objekt mittels zumindest einer Kamera (3a, 3b, 3c) beobachtet wird und mittels der zumindest einen Kamera (3a, 3b, 3c) durch die Beobachtung zumindest zwei Kamerabilder zu unterschiedlichen Zeitpunkten tj, i = 1, ..., n, erzeugt werden, welche die jeweils reflektierte Strahlung abbilden,
wobei in den Kamerabildern zumindest eine durch ein Formmerkmal (41a, 41b, 41c) des Objektes bewirkte Reflexion (51a, 51b, 51c, 52) der Strahlung an dem Objekt ermittelt wird,
wobei in einem Polygonzugschritt für zumindest eine der zumindest einen Reflexionen (51a, 51b, 51c, 52) in den zumindest zwei Kamerabildern jeweils ein Polygonzug bestimmt wird,
wobei hier unter dem Polygonzug eine lineare Form in dem entsprechenden Kamerabild verstanden wird, in der eine Mehrzahl an Punkten jeweils durch gerade Linien miteinander verbunden sind,
wobei aus den zumindest zwei Kamerabildern eine zweidimensionale Repräsentierung erzeugt wird, in welcher in einer Dimension der zwei Dimensionen die Zeitpunkte tᵢ aufgetragen sind, zu denen die zumindest zwei Kamerabilder erzeugt werden und in der anderen der zwei Dimensionen, als x-Dimension bezeichnet, eine Raumkoordinate senkrecht zu der Bewegungsrichtung aufgetragen ist, und als Wert an den Punkten der zweidimensionalen Repräsentierung zumindest eine Eigenschaft des zumindest einen Polygonzugs in dem Kamerabild zum Zeitpunkt tᵢ am Ort x eingetragen ist,
und
wobei zumindest eines der Formmerkmale (41a, 41b, 41c) als Verformung oder nicht Verformung klassifiziert wird anhand des Verhaltens des zumindest einen Polygonzugs über die zumindest zwei Kamerabilder hinweg.

2. Verfahren nach dem vorhergehenden Anspruch,
wobei eine Abbildung erzeugt wird, welche eine räumliche Verteilung von jenen Verformungen (41a, 41b, 41c) abbildet, die als Verformung klassifiziert werden.

3. Verfahren nach einem der vorhergehenden Ansprüche, wobei die zumindest eine Eigenschaft des Polygonzugs eine mittlere Steigung des Polygonzugs an der Raumkoordinate in der x-Dimension, und/oder ein Abstand zwischen zwei Abschnitten des Polygonzugs an der Raumkoordinate in der x-Dimension und/oder eine Position des Polygonzugs in der Bewegungsrichtung ist.

4. Verfahren nach dem vorhergehenden Anspruch, wobei ein Hintergrund (1), der elektromagnetische Strahlung der Frequenz, mit der das Objekt im Beleuchtungsvorgang bestrahlt wird, im Wesentlichen nicht reflektiert oder ausstrahlt, vorhanden ist, und der Hintergrund so angeordnet ist, dass das Objekt den Hintergrund (1) dort in Richtung der zumindest einen Kamera (3a, 3b, 3c) reflektiert, wo es nicht das Licht der zumindest einen Beleuchtungseinrichtung (2) in Richtung der zumindest einen Kamera (3a, 3b, 3c) reflektiert.

5. Verfahren nach einem der vorhergehenden Ansprüche, wobei mittels zumindest eines an einem vorgegebenen Ort angeordneten Distanzsensors eine Distanz zwischen der zumindest einen Kamera (3a, 3b, 3c) und dem Objekt bestimmt wird und wobei die zweidimensionale Repräsentierung anhand der Distanz in Richtung der Zeitpunkte tᵢ skaliert wird und/oder wobei das Verfahren mittels Messwerten zumindest eines Steuerungssensors, vorzugsweise zumindest einer Lichtschranke, gesteuert, vorzugsweise gestartet und/oder beendet, wird und/oder wobei
die Geschwindigkeit der Bewegung des Objektes während des Beleuchtungsvorganges mittels zumindest eines Geschwindigkeitssensors und/oder durch Bildverarbeitung in den Kamerabildern bestimmt wird, und wobei die zweidimensionale Repräsentierung anhand der Geschwindigkeit in Richtung der Zeitpunkte tᵢ skaliert wird.

6. Verfahren nach einem der vorhergehenden Ansprüche,
wobei die Beleuchtungseinrichtung (2) zumindest eine oder genau eine Lichtleiste (2) ist, die einen Bereich zumindest teilweise umläuft, durch den das Objekt während des Beleuchtungsvorganges bewegt wird, wobei vorzugsweise die zumindest eine Kamera (3a, 3b, 3c) an der Lichtleiste (2) so montiert ist, dass eine Blickrichtung der Kamera (3a, 3b, 3c) von einem Punkt auf oder unmittelbar angrenzend an die Lichtleiste (2) ausgeht.

7. Verfahren nach einem der vorhergehenden Ansprüche, weiter aufweisend einen weiteren Bestimmungsschritt, in dem aus der zweidimensionalen Repräsentierung eine Position und/oder Größe der Verformung bestimmt wird, vorzugsweise unter Verwendung zumindest einer Form und/oder Größe des zumindest einen Polygonzugs und/oder einer Abbildung zumindest eines auf dem Objekt angebrachten Markers in der zweidimensionalen Repräsentierung.

8. Verfahren nach einem der vorhergehenden Ansprüche, weiter aufweisend einen Zuordnungsvorgang, in dem die zweidimensionale Repräsentierung Einzelteilen des Objekts zugeordnet wird, vorzugsweise auf Basis von Segmentierungen des Objektes in den Kamerabildern und/oder auf Basis eines Vergleichs von Forminformationen über das Objekt, und/oder mittels Sensormessung und/oder mittels auf dem Objekt angebrachter Marker.

9. Verfahren nach einem der vorhergehenden Ansprüche, wobei das Objekt ein Kraftfahrzeug ist und/oder die Verformungen (41a, 41b, 41c) Beulen in einer Oberfläche des Objektes sind.

10. Verfahren nach einem der vorhergehenden Ansprüche,
wobei die Formmerkmale (41a, 41b, 41c) anhand des Verhaltens des zumindest einen Polygonzugs über die zumindest zwei Kamerabilder hinweg klassifiziert werden mittels zumindest eines neuronalen Netzes.

11. Verfahren nach Anspruch 10, wobei das neuronale Netz dadurch angelernt ist, dass ein Objekt mittels zumindest einer Beleuchtungseinrichtung (2) mit elektromagnetischer Strahlung zumindest einer solchen Frequenz bestrahlt wird, dass das Objekt die elektromagnetische Strahlung als reflektierte Strahlung reflektiert,
wobei das Objekt während des Beleuchtens gegenüber der zumindest einen Beleuchtungseinrichtung (2) in der Bewegungsrichtung bewegt wird,
wobei das Objekt mittels der zumindest einen Kamera (3a, 3b, 3c) beobachtet wird und mittels der zumindest einen Kamera (3a, 3b, 3c) durch die Beobachtung zumindest zwei Kamerabilder zu unterschiedlichen Zeitpunkten t'ᵢ , i=1, ..., m, erzeugt werden, welche die jeweils reflektierte Strahlung abbilden,
wobei in den Kamerabildern durch Formmerkmale (41a, 41b, 41c) des Objektes bewirkte Reflexionen (51a, 51b, 51c, 52) der Strahlung am Objekt ermittelt werden,
wobei für zumindest eine der Reflexionen (51a, 51b, 51c, 52) in den zumindest zwei Kamerabildern jeweils ein Polygonzug bestimmt wird, wobei aus den zumindest zwei Kamerabildern eine zweidimensionale Repräsentierung erzeugt wird, in welcher in einer Dimension der zwei Dimensionen die Zeitpunkte t'ᵢ aufgetragen sind, zu denen die zumindest zwei Kamerabilder erzeugt werden und in der anderen der zwei Dimensionen, als x-Dimension bezeichnet, eine Raumkoordinate senkrecht zu der Bewegungsrichtung aufgetragen ist, und als Wert an den Punkten der zweidimensionalen Repräsentierung zumindest eine Eigenschaft des Polygonzugs in dem Kamerabild zum Zeitpunkt tᵢ am Ort x eigetragen ist,
und wobei zumindest einige der Formmerkmale (41a, 41b, 41c) als Verformungen (41a, 41b, 41c) des Objekts vorgegeben werden und dem neuronalen Netz das Verhalten der diesen Verformungen (41a, 41b, 41c) entsprechenden Polygonzüge über die zumindest zwei Kamerabilder hinweg als charakteristisch für die Verformungen (41a, 41b, 41c) vorgegeben wird.

12. Vorrichtung zur Bestimmung von Verformungen an einem Objekt aufweisend
zumindest eine Beleuchtungseinrichtung (2), die dazu eingerichtet ist, einen Messbereich, durch den das Objekt bewegbar ist, mit elektromagnetischer Strahlung zumindest einer solchen Frequenz zu beleuchten, dass das Objekt die elektromagnetische Strahlung als reflektierte Strahlung reflektiert,
zumindest eine Kamera (3a, 3b, 3c), die dazu eingerichtet ist, das Objekt zu beobachten, während es durch den Messbereich bewegt wird, und dazu eingerichtet ist, durch die Beobachtung zumindest zwei Kamerabilder zu unterschiedlichen Zeitpunkten tᵢ , i=1,...,n, zu erzeugen, welche die jeweils reflektierte Strahlung abbilden,
weiter aufweisend eine Auswerteeinheit, die dazu eingerichtet ist, in den Kamerabildern zumindest eine durch ein Formmerkmal (41a, 41b, 41c) des Objektes bewirkte Reflexion (51a, 51b, 51c, 52) an dem Objekt zu ermitteln,
wobei für zumindest eine der zumindest einen Reflexion (51a, 51b, 51c, 52) in den zumindest zwei Kamerabildern jeweils ein Polygonzug bestimmt wird,
wobei hier unter dem Polygonzug eine lineare Form in dem entsprechenden Kamerabild verstanden wird, in der eine Mehrzahl an Punkten jeweils durch gerade Linien miteinander verbunden sind,
wobei aus den zumindest zwei Kamerabildern eine zweidimensionale Repräsentierung erzeugt wird, in welcher in einer Dimension der zwei Dimensionen die Zeitpunkte tᵢ aufgetragen sind, zu denen die zumindest zwei Kamerabilder erzeugt werden und in der anderen der zwei Dimensionen, als x-Dimension bezeichnet, eine Raumkoordinate senkrecht zu der Bewegungsrichtung aufgetragen ist, und als Wert an den Punkten der zweidimensionalen Repräsentierung zumindest eine Eigenschaft des zumindest einen Polygonzugs in dem Kamerabild zum Zeitpunkt tᵢ am Ort x eingetragen ist,
und
wobei zumindest eines der Formmerkmale (41a, 41b, 41c) als Verformung klassifiziert wird anhand des Verhaltens des zumindest einen Polygonzugs über die zumindest zwei Kamerabilder hinweg.

13. Vorrichtung nach dem vorhergehenden Anspruch, wobei die Beleuchtungseinrichtung (2) zumindest eine oder genau eine Lichtleiste (2) ist, die den Messbereich zumindest teilweise umläuft, wobei vorzugsweise die zumindest eine Kamera (3a, 3b, 3c) an der Lichtleiste (2) so montiert ist, dass eine Blickrichtung der Kamera (3a, 3b, 3c) von einem Punkt auf oder unmittelbar angrenzend an die Lichtleiste (2) ausgeht.

14. Vorrichtung nach einem der beiden vorhergehenden Ansprüche, aufweisend einen Hintergrund (1), der so ausgestaltet ist, dass er elektromagnetische Strahlung der Frequenz, mit der das Objekt durch die zumindest eine Beleuchtungseinrichtung (2) beleuchtbar ist, nicht reflektiert oder ausstrahlt, wobei der Hintergrund (1) so angeordnet ist, dass das Objekt den Hintergrund (1) dort in Richtung der zumindest einen Kamera (3a, 3b, 3c) reflektiert, wo es nicht das Licht der zumindest einen Beleuchtungseinrichtung (2) in Richtung der zumindest einen Kamera (3a, 3b, 3c) reflektiert.

15. Vorrichtung nach einem der Ansprüche 12 bis 14, wobei die Vorrichtung so ausgebildet ist, dass mit der Vorrichtung ein Verfahren nach einem der Ansprüche 1 bis 11 ausführbar ist.

## Claims

1. Method for determining deformations on an object,
wherein in an illumination process, the object is irradiated by means of at least one illumination device (2) with electromagnetic radiation of at least such a frequency that the object reflects the electromagnetic radiation as reflected radiation,
the object and the at least one illumination device (2) being moved relative to each other in a direction of movement during the illumination process,
in an observation process, the object being observed by means of at least one camera (3a, 3b, 3c) and at least two camera images being produced by means of the at least one camera (3a, 3b, 3c) by the observation at different times tᵢ, i = 1, ..., n, which image the respectively reflected radiation,
in the camera images, at least one reflection (51a, 51b, 51c, 52) of the radiation on the object caused by a shape feature (41a, 41b, 41c) of the object being determined,
in a polygonal chain step for at least one of the at least one reflections (51a, 51b, 51c, 52) in the at least two camera images, respectively one polygonal chain being determined, wherein here as a polygonal chain a linear shape in the respective camera image is understood, in which a plurality of points are respectively connected by straight lines,
from the at least two camera images, a two-dimensional representation being produced, in which, in one dimension of the two dimensions, the times tᵢ are plotted, at which the at least two camera images are produced and, in the other of the two dimensions, termed x-dimension, a spatial coordinate perpendicular to the direction of movement being plotted , and at least one property of the at least one polygonal chain in the camera image being plotted as value at the points of the two-dimensional representation at the time tᵢ at the location x,
and
at least one of the shape features (41a, 41b, 41c) being classified as deformation or non-deformation on the basis of the behaviour of the at least one polygonal chain over the at least two camera images.

2. Method according to the preceding claim,
an image being produced which images a spatial distribution of those deformations (41a, 41b, 41c) which are classified as deformation.

3. Method according to one of the preceding claims, the at least one property of the polygonal chain being an average incline of the polygonal chain at the spatial coordinate in the x-dimension, and/or a spacing between two sections of the polygonal chain at the spatial coordinate in the x-dimension and/or a position of the polygonal chain in the direction of movement.

4. Method according to the preceding claim, a background (1) being present which essentially does not reflect or emit electromagnetic radiation of the frequency with which the object is irradiated in the illumination process, and the background being disposed such that the object reflects the background (1) in the direction of the at least one camera (3a, 3b, 3c) where it does not reflect the light of the at least one illumination device (2) in the direction of the at least one camera (3a, 3b, 3c).

5. Method according to one of the preceding claims, by means of at least one distance sensor disposed at a prescribed location, a distance between the at least one camera (3a, 3b, 3c) and the object being determined, and the two-dimensional representation being scaled on the basis of the distance in the direction of the times tᵢ and/or the method being controlled, preferably started and/or ended, by means of measuring values of at least one control sensor, preferably at least one light barrier, and/or
the speed of movement of the object during the illumination process being determined by means of at least one speed sensor and/or by image processing in the camera images, and the two-dimensional representation being scaled on the basis of the speed in the direction of the times tᵢ.

6. Method according to one of the preceding claims,
the illumination device (2) being at least one or precisely one light strip (2) which surrounds a region at least partially, through which the object is moved during the illumination process, preferably the at least one camera (3a, 3b, 3c) being mounted on the light strip (2) such that a viewing direction of the camera (3a, 3b, 3c) starts from a point on or immediately adjacent to the light strip (2).

7. Method according to one of the preceding claims, having furthermore a further determining step in which, from the two-dimensional representation, a position and/or size of the deformation is determined, preferably using at least one shape and/or size of the at least one polygonal chain and/or an image of at least one marker fitted on the object in the two-dimensional representation.

8. Method according to one of the preceding claims, having furthermore an assignment process in which the two-dimensional representation is assigned to individual parts of the object, preferably on the basis of segmentations of the object in the camera images and/or on the basis of a comparison of shape information about the object, and/or by means of sensor measurement and/or by means of markers fitted on the object.

9. Method according to one of the preceding claims, the object being a motor vehicle and/or the deformations (41a, 41b, 41c) being dents in a surface of the object.

10. Method according to one of the preceding claims,
the shape features (41a, 41b, 41c) being classified on the basis of the behaviour of the at least one polygonal chain over the at least two camera images by means of at least one neuronal network.

11. Method according to claim 10, the neuronal network being taught by an object being irradiated by means of at least one illumination device (2) with electromagnetic radiation of at least such a frequency that the object reflects the electromagnetic radiation as reflected radiation, the object being moved during the illumination relative to the at least one illumination device (2) in the direction of movement,
the object being observed by means of the at least one camera (3a, 3b, 3c) and at least two camera images being produced by means of the at least one camera (3a, 3b, 3c) by the observation at different times t'ᵢ, i = 1, ..., m, which image the respectively reflected radiation,
in the camera images, reflections (51a, 51b, 51c, 52) of the radiation on the object, caused by shape features (41a, 41b, 41c) of the object, being determined,
for at least one of the reflections (51a, 51b, 51c, 52) in the at least two camera images, respectively one polygonal chain being determined, from the at least two camera images, a two-dimensional representation being produced, in which, in one dimension of the two dimensions, the times t'ᵢ are plotted, at which the at least two camera images are produced and, in the other of the two dimensions, termed x-dimension, a spatial coordinate perpendicular to the direction of movement being plotted , and at least one property of the polygonal chain in the camera image being entered as value at the points of the two-dimensional representation at the time tᵢ at the location x, and at least some of the form features (41a, 41b, 41c) being prescribed as deformations (41a, 41b, 41c) of the object and the behaviour of the polygonal chains corresponding to these deformations (41a, 41b, 41c) over the at least two camera images being prescribed to the neuronal network as characteristic for the deformations (41a, 41b, 41c).

12. Device for determining deformations on an object having
at least one illumination device (2) being configured to illuminate a measuring region, through which the object can be moved, with electromagnetic radiation of at least such a frequency that the object reflects the electromagnetic radiation as reflected radiation,
at least one camera (3a, 3b, 3c) being configured to observe the object, whilst it is moved through the measuring region, and being configured to produce, by the observation, at least two camera images at different times tᵢ, i = 1, ..., n, which image the respectively reflected radiation,
having furthermore an evaluation unit configured to detect at least one reflection (51a, 51b, 51c, 52) on the object, caused by a shape feature (4a, 4b, 4c) of the object, in the camera images,
for at least one of the at least one reflection (51a, 51b, 51c, 52) in the at least two camera images respectively a polygonal chain being determined, from the at least two camera images, wherein here as a polygonal chain a linear shape in the respective camera image is understood, in which a plurality of points are respectively connected by straight lines,
a two-dimensional representation being produced, in which, in one dimension of the two dimensions, the times tᵢ are plotted, at which the at least two camera images are produced and, in the other of the two dimensions, termed x-dimension, a spatial coordinate perpendicular to the direction of movement being plotted, and at least one property of the at least one polygonal chain in the camera image being entered as value at the points of the two-dimensional representation at the time tᵢ at the location x,
and
at least one of the shape features (41a, 41b, 41c) being classified as deformation on the basis of the behaviour of the at least one polygonal chain over the at least two camera images.

13. Device according to the preceding claim, the illumination device (2) being at least one or precisely one light strip (2) which surrounds the measuring region at least partially, preferably the at least one camera (3a, 3b, 3c) being mounted on the light strip (2) such that a viewing direction of the camera (3a, 3b, 3c) starts from a point on or immediately adjacent to the light strip (2).

14. Device according to one of the two preceding claims, having a background (1) which is configured such that it does not reflect or emit electromagnetic radiation of the frequency with which the object can be illuminated by the at least one illumination device (2), the background (1) being disposed such that the object reflects the background (1) in the direction of the at least one camera (3a, 3b, 3c), where it does not reflect the light of the at least one light source in the direction of the at least one camera (3a, 3b, 3c).

15. Device according to one of the claims 12 to 14, the device being configured such that a method according to one of the claims 1 to 11 being able to be implemented with the device.

## Revendications

1. Procédé pour déterminer des déformations sur un objet, dans lequel, dans un processus d'éclairage, l'objet est irradié au moyen d'au moins un dispositif d'éclairage (2) avec un rayonnement électromagnétique d'au moins une fréquence telle que l'objet réfléchit le rayonnement électromagnétique sous forme de rayonnement réfléchi,
dans lequel l'objet et le au moins un dispositif d'éclairage (2) sont déplacés l'un par rapport à l'autre dans une direction de mouvement pendant le processus d'éclairage,
dans lequel l'objet est observé au cours d'un processus d'observation au moyen d'au moins une caméra (3a, 3b, 3c) et au moins deux images de caméra sont générées au moyen de la au moins une caméra (3a, 3b, 3c) par l'observation à des moments tᵢ, i = 1, ..., n différents, lesquels reproduisent le rayonnement respectivement réfléchi,
dans lequel au moins une réflexion (51a, 51b, 51c, 52) du rayonnement sur l'objet, provoquée par une caractéristique de forme (41a, 41b, 41c) de l'objet, est déterminée dans les images de caméra,
dans lequel, dans une étape de tracé polygonal, respectivement un tracé polygonal est déterminé pour au moins l'une des au moins une réflexions (51a, 51b, 51c, 52) dans les au moins deux images de caméra,
dans lequel le tracé polygonal étant entendu ici comme une forme linéaire dans l'image de caméra correspondante, dans laquelle une pluralité de points sont respectivement reliés entre eux par des lignes droites,
dans lequel une représentation bidimensionnelle est générée à partir des au moins deux images de caméra, dans laquelle les moments tᵢ sont portés dans une dimension des deux dimensions, auxquels les au moins deux images de caméra sont générées et dans l'autre des deux dimensions, désignée par dimension x, une coordonnée spatiale perpendiculaire à la direction de mouvement est portée, et au moins une propriété du au moins un tracé polygonal dans l'image de caméra au moment tᵢ à l'endroit x est inscrite comme valeur aux points de la représentation bidimensionnelle,
et
dans lequel au moins l'une des caractéristiques de forme (41a, 41b, 41c) est classée comme une déformation ou absence de déformation sur la base du comportement du au moins un tracé polygonal par-dessus les au moins deux images de caméra.

2. Procédé selon la revendication précédente, dans lequel une image est générée, laquelle reproduit une distribution spatiale de ces déformations (41a, 41b, 41c) qui sont classées en tant que déformation.

3. Procédé selon l'une quelconque des revendications précédentes, dans lequel l'au moins une propriété du tracé polygonal est une pente moyenne du tracé polygonal au niveau de la coordonnée spatiale dans la dimension x, et/ou une distance entre deux segments du tracé polygonal au niveau de la coordonnée spatiale dans la dimension x et/ou une position du tracé polygonal dans la direction de mouvement.

4. Procédé selon la revendication précédente, dans lequel un arrière-plan (1) qui ne réfléchit ou n'émet sensiblement pas de rayonnement électromagnétique de la fréquence à laquelle l'objet est irradié dans le processus d'éclairage est présent, et l'arrière-plan est disposé de telle sorte que l'objet réfléchit l'arrière-plan (1) en direction de la au moins une caméra (3a, 3b, 3c) là où il ne réfléchit pas la lumière du au moins un dispositif d'éclairage (2) en direction de la au moins une caméra (3a, 3b, 3c).

5. Procédé selon l'une quelconque des revendications précédentes, dans lequel une distance entre l'au moins une caméra (3a, 3b, 3c) et l'objet est déterminée au moyen d'au moins un capteur de distance disposé à un endroit prédéfini et dans lequel la représentation bidimensionnelle est mise à l'échelle à l'aide de la distance en direction des moments tᵢ et/ou dans lequel le procédé est commandé, de préférence démarré et/ou terminé, au moyen de valeurs de mesure d'au moins un capteur de commande, de préférence d'au moins une barrière photoélectrique et/ou
dans lequel
la vitesse du mouvement de l'objet pendant le processus d'éclairage est déterminée au moyen d'au moins un capteur de vitesse et/ou par traitement d'image dans les images de caméra, et dans lequel la représentation bidimensionnelle est mise à l'échelle à l'aide de la vitesse en direction des moments tᵢ.

6. Procédé selon l'une quelconque des revendications précédentes, dans lequel le dispositif d'éclairage (2) est au moins une ou exactement une barre lumineuse (2) qui entoure au moins partiellement une zone à travers laquelle l'objet est déplacé pendant le processus d'éclairage, dans lequel de préférence la au moins une caméra (3a, 3b, 3c) est montée sur la barre lumineuse (2) de telle sorte qu'une direction de visée de la caméra (3a, 3b, 3c) part d'un point sur la barre lumineuse (2) ou directement adjacent à celle-ci.

7. Procédé selon l'une quelconque des revendications précédentes, présentant en outre une étape de détermination supplémentaire dans laquelle une position et/ou taille de la déformation est déterminée à partir de la représentation bidimensionnelle, de préférence en utilisant au moins une forme et/ou taille dudit au moins un tracé polygonal et/ou une image du au moins un marqueur appliqué sur l'objet dans la représentation bidimensionnelle.

8. Procédé selon l'une quelconque des revendications précédentes, présentant en outre un processus d'attribution dans lequel la représentation bidimensionnelle est attribuée à des parties individuelles de l'objet, de préférence sur la base de segmentations de l'objet dans les images de caméra et/ou sur la base d'une comparaison d'informations de forme sur l'objet, et/ou au moyen d'une mesure par capteur et/ou au moyen de marqueurs appliqués sur l'objet.

9. Procédé selon l'une quelconque des revendications précédentes, dans lequel l'objet est un véhicule à moteur et/ou les déformations (41a, 41b, 41c) sont des bosses dans une surface de l'objet.

10. Procédé selon l'une quelconque des revendications précédentes, dans lequel les caractéristiques de forme (41a, 41b, 41c) sont classées à l'aide d'au moins un réseau neuronal sur la base du comportement du au moins un tracé polygonal par-dessus les au moins deux images de caméra.

11. Procédé selon la revendication 10, dans lequel le réseau neuronal reçoit un apprentissage du fait qu'un objet est irradié au moyen d'au moins un dispositif d'éclairage (2) avec un rayonnement électromagnétique d'au moins une fréquence telle que l'objet réfléchit le rayonnement électromagnétique sous forme de rayonnement réfléchi,
dans lequel l'objet est déplacé dans la direction de mouvement par rapport à l'au moins un dispositif d'éclairage (2) pendant l'éclairage,
dans lequel l'objet est observé au moyen de l'au moins une caméra (3a, 3b, 3c) et au moyen de l'au moins une caméra (3a, 3b, 3c), au moins deux images de caméra sont générées par l'observation à des moments différents t'ᵢ, i = 1, ..., m, lesquels reproduisent le rayonnement respectivement réfléchi,
dans lequel des réflexions (51a, 51b, 51c, 52) du rayonnement sur l'objet, provoquées par des caractéristiques de forme (41a, 41b, 41c) de l'objet, sont déterminées dans les images de caméra,
dans lequel pour au moins l'une des réflexions (51a, 51b, 51c, 52), respectivement un tracé polygonal est déterminé dans les au moins deux images de caméra,
dans lequel une représentation bidimensionnelle est générée à partir des au moins deux images de caméra, dans laquelle les moments t'ᵢ auxquels les au moins deux images de caméra sont générées sont portés dans une dimension des deux dimensions et dans l'autre des deux dimensions, désignée par dimension x, une coordonnée spatiale perpendiculaire à la direction de mouvement est portée, et au moins une propriété du tracé polygonal dans l'image de caméra au moment tᵢ à l'endroit x est inscrite comme valeur aux points de la représentation bidimensionnelle,
et dans lequel au moins certaines des caractéristiques de forme (41a, 41b, 41c) sont prédéfinies comme déformations (41a, 41b, 41c) de l'objet et le comportement des tracés polygonaux correspondant à ces déformations (41a, 41b, 41c) est prescrit au réseau neuronal par-dessus les au moins deux images de caméra comme caractéristique des déformations (41a, 41b, 41c).

12. Dispositif pour déterminer des déformations sur un objet, présentant
au moins un dispositif d'éclairage (2) qui est conçu pour éclairer une zone de mesure, à travers laquelle l'objet est mobile, avec un rayonnement électromagnétique d'au moins une fréquence telle que l'objet réfléchit le rayonnement électromagnétique sous forme de rayonnement réfléchi,
au moins une caméra (3a, 3b, 3c) qui est conçue pour observer l'objet pendant qu'il est déplacé à travers la zone de mesure et qui est conçue pour produire, par l'observation, au moins deux images de caméra à des instants différents tᵢ, i = 1, ..., n, lesquels reproduisent le rayonnement réfléchi respectif,
présentant en outre une unité d'évaluation qui est conçue pour identifier dans les images de caméra au moins une réflexion (51a, 51b, 51c, 52) sur l'objet provoquée par une caractéristique de forme (41a, 41b, 41c) de l'objet,
dans lequel, pour au moins l'une de l'au moins une réflexion (51a, 51b, 51c, 52), respectivement un tracé polygonal est déterminé dans les au moins deux images de caméra,
dans lequel le tracé polygonal étant entendu ici comme une forme linéaire dans l'image de caméra correspondante, dans laquelle une pluralité de points sont respectivement reliés entre eux par des lignes droites,
dans lequel une représentation bidimensionnelle est générée à partir des au moins deux images de caméra, dans laquelle les moments tᵢ sont portés dans une dimension des deux dimensions, auxquels les au moins deux images de caméra sont générées et dans l'autre des deux dimensions, désignée par dimension x, une coordonnée spatiale perpendiculaire à la direction de mouvement est portée, et au moins une propriété du au moins un tracé polygonal dans l'image de caméra au moment tᵢ à l'endroit x est inscrite comme valeur aux points de la représentation bidimensionnelle,
et
dans lequel au moins l'une des caractéristiques de forme (41a, 41b, 41c) est classée comme déformation sur la base du comportement du au moins un tracé polygonal par-dessus les au moins deux images de caméra.

13. Dispositif selon la revendication précédente, dans lequel le dispositif d'éclairage (2) est au moins une ou exactement une barre lumineuse (2) qui entoure au moins partiellement la zone de mesure, dans lequel de préférence la au moins une caméra (3a, 3b, 3c) est montée sur la barre lumineuse (2) de telle sorte qu'une direction de visée de la caméra (3a, 3b, 3c) part d'un point sur la barre lumineuse (2) ou immédiatement adjacent à celle-ci.

14. Dispositif selon l'une quelconque des deux revendications précédentes, présentant un arrière-plan (1) qui est conçu de telle sorte qu'il ne réfléchit pas ou n'émet pas de rayonnement électromagnétique de la fréquence à laquelle l'objet peut être éclairé par l'au moins un dispositif d'éclairage (2), dans lequel l'arrière-plan (1) est disposé de telle sorte que l'objet réfléchit l'arrière-plan (1) en direction de la au moins une caméra (3a, 3b, 3c) là où il ne réfléchit pas la lumière du au moins un dispositif d'éclairage (2) en direction de la au moins une caméra (3a, 3b, 3c).

15. Dispositif selon l'une quelconque des revendications 12 à 14, dans lequel le dispositif est réalisé de sorte qu'un procédé selon l'une quelconque des revendications 1 à 11 peut être mis en oeuvre avec le dispositif.
